# EUROPÄISCHE PATENTSCHRIFT

(11) **EP 0 545 078 B1**
(45) Veröffentlichungstag und Bekanntmachung des Hinweises auf die Patenterteilung: **08.04.1998**
(21) Anmeldenummer: 92118672.2
(22) Anmeldetag: 31.10.1992
(51) Int. Cl.: B23Q 3/10

(54) **Aufspannvorrichtung für Werkzeugmaschinen**
Clamping device for machine tools
Dispositif de serrage pour machines-outils

(30) Priorität: 30.11.1991 DE 4139522
(43) Veröffentlichungstag der Anmeldung: 09.06.1993
(73) Patentinhaber: HASCO-Normalien Hasenclever GmbH + Co, D-58515 Lüdenscheid (DE)
(72) Erfinder: Schröder, Harald, W-5880 Lüdenscheid (DE)
(74) Vertreter: Patentanwälte Ostriga & Sonnet

(56) Entgegenhaltungen:
- FR-A- 200 250
- GB-A- 1 217 741

## Beschreibung

Die Erfindung betrifft eine Aufspannvorrichtung für Werkzeugmaschinen entsprechend dem Oberbegriff des Patentanspruchs 1. Eine solche Aufspannvorrichtung ist beispielsweise durch den Katalog "norm + technik Vorrichtungssysteme" aus dem Jahr 1990 der Erwin Halder KG Maschinenfabrik D-7959 Achstetten-Bronnen bekanntgeworden. Die Katalogseite 68 zeigt eine mit Zentrierlöchern versehene Grundplatte, das Aufspannelement, auf welches ein Aufbauelement als Anschlußaufspannelement gemäß Katalogseite 77 positioniert werden kann. Auf diesem Aufbauelement kann beispielsweise ein Prismenteil gemäß Katalogseite 84 oder eine Positionierleiste gemäß Katalogseite 85 rastergerecht, und zwar mittels Paßschrauben oder mittels Zentrierbolzen, zentriert werden.

Von der FR-A-2 000 250 ist ein Anschlußaufspannelement bekannt, dessen jeweils einen Zentrier- und einen Gewindebereich aufweisende Zentrierlöcher in einem Quadratraster mit einer Rasterteilung von 25 mm angeordnet sind. In derselben Rasterteilung, jedoch um 12,5 mm versetzt, besitzt das bekannte Anschlußaufspannelement der Befestigung dienende Gewindebohrungen ohne Zentrierfunktion. Die von der FR-A-2 000 250 bekannte Anordnung bildet damit ein Zentrierraster mit Befestigungsfunktion und ein zusätzliches Gewindelochraster mit ausschließlicher Befestigungsfunktion, das um eine halbe Rasterteilung versetzt ist.

Ausgehend von der bekannten Aufspannvorrichtung entsprechend dem Obergegriff des Patentanspruchs 1 gemäß der Veröffentlichung a.a.O. im Halder-Katalog "norm + technik Vorrichtungssysteme", liegt der Erfindung die Aufgabe zugrunde, die bekannte Aufspannvorrichtung unter Aufwendung lediglich einfacher Mittel mit einer zusätzlichen vorteilhaften Funktion zu versehen.

Entsprechend der Erfindung wird diese Aufgabe dadurch gelöst, daß sowohl die Zentrierlöcher der Längslochreihen des Anschlußaufspannelements als auch analog dazu die Gegenzentrierlöcher des Werkstück-Positionierelements jeweils um ein Viertel der Grundraster-Teilung zueinander längsversetzt sind.

Die erfindungsgemäße Anordnung gestattet folgende vorteilhafte Anwendung:

Wenn die Grundraster-Teilung 50 mm beträgt, kann das Anschlußaufspannelement gemeinsam mit dem auf ihm befindlichen Positionierelement in 50 mm-Schritten auf dem Aufspannelement (z.B. auf einer Grundplatte) versetzt werden. Für den Fall, daß zusätzlich eine kleinere Schrittunterteilung erwünscht ist, versetzt man das Positionierelement bezüglich der in halbierter Grundraster-Teilung angeordneten Zentrierlöcher des Anschlußaufspannelements, also um z.B. einen 25 mm-Schritt. Falls ein noch kleineres Schrittmaß zur Positionierung des Werkstückes erforderlich ist, braucht man das Positionierelement nur um ein 180° etwa um den Schwerpunkt seiner großen Grundfläche herum zu drehen, um an einer der beiden einander parallelen ebenen Positionierflächen eine Schrittdifferenz von 12,5 mm zu erzielen.

Aus vorstehender Schilderung wird deutlich, daß es der Erfindung mit höchst einfachen Mitteln gelungen ist, eine Raster-Unterteilung von beispielsweise 50 mm auf 25 mm und schließlich auf 12,5 mm zu erzielen. Dies bedeutet, daß die bekannte Aufspannvorrichtung gemäß dem Oberbegriff des Patentanspruches 1 mit höchst einfachen Mitteln mit einer zusätzlichen Funktion, nämlich mit der Funktion eines Feinrasters versehen worden ist.

In weiterer Ausgestaltung der Erfindung beträgt der rechtwinklige Abstand der Längsachse des mittigen Gegenzentrierlochs von einer der beiden Positionierflächen ein Vielfaches eines Viertels der Grundraster-Teilung. Bei Einhaltung der vorbeschriebenen Merkmale befinden sich die einander parallelen Positionierflächen stets in einer rastergerechten Position.

In weiterer Ausgestaltung der Erfindung bildet jede Längslochreihe des Anschlußaufspannelementes einen integrierten Bestandteil einer T-förmig hinterschnittenen Spannut, was durch die DE 40 38 969 an sich bekannt ist. Diese, ein integriertes Nut-Lochraster darstellenden Spannuten lassen sich im Zusammenhang mit der Erfindung vorteilhaft verwenden, zumal keine besonderen Nutensteine (wie gemäß der DE 40 34 340 A1) zur Erzielung von Feinraster-Schritten erforderlich sind.

In den Zeichnungen ist die Erfindung anhand eines vorteilhaften Ausführungsbeispiels näher dargestellt.

Es zeigt:
- Fig. 1: eine teilweise dargestellte Palette mit einem auf ihr positionierten Anschlußaufspannelement und einer wiederum auf letzterer positionierten Anschlagplatte,
- Fig. 2: einen Vertikalschnitt entsprechend der in Fig. 1 mit II-II bezeichneten Schnittlinie,
- Fig. 3: lediglich das Anschlußaufspannelement mit Anschlagplatte gemäß Fig. 1, jedoch in einer im Vergleich zu Fig. 1 um 180° verdrehten Position der Anschlagplatte und
- Fig. 4: einen Vertikalschnitt entsprechend der Schnittlinie IV-IV in Fig. 3.

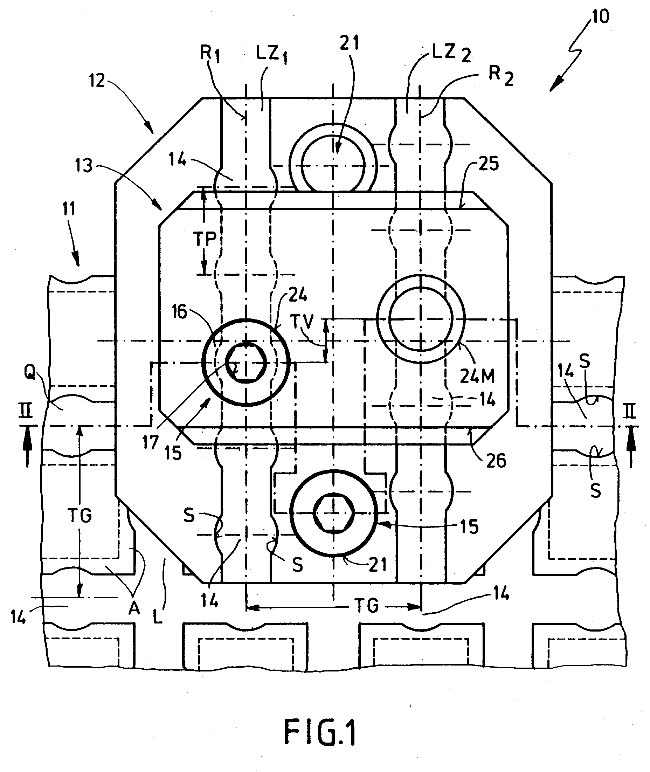

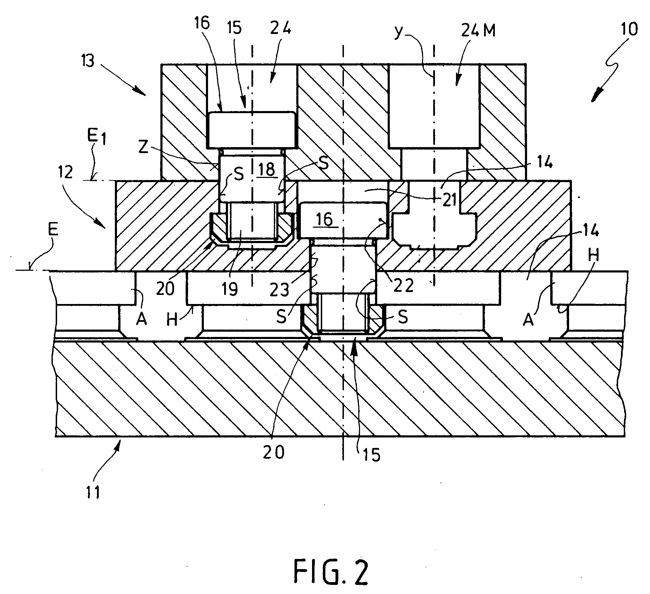

In den Fig. 1 und 2 ist eine Aufspannvorrichtung insgesamt mit der Bezugsziffer 10 bezeichnet. Die Aufspannvorrichtung 10 weist als wesentlichste Bestandteile eine Grundplatte bzw. Palette 11 auf, die nur teilweise dargestellt ist. Die Aufspannvorrichtung 10 besitzt ferner ein Anschlußaufspannelement in Form einer Zwischenplatte 12 sowie schließlich ein Positionierelement in Gestalt einer Anschlagplatte 13.

Die Palette 11 ist mit Längs-Spannuten L und Quer-Spannnuten Q versehen, die jeweils einen etwa T-förmigen Querschnitt mit Hinterschneidungsbereichen H aufweisen.

Die Hinterschneidungsbereiche H sind oberseitig von Längsrandbereichen A begrenzt. Die Längsrandbereiche A sind von in den Hinterschneidungsbereichen H mündenden geraden kreiszylindrischen Zentrierbohrungen (Zentrierlöcher) 14 durchsetzt, die somit jeweils zwei schalenförmige Führungsflächen S bilden. Die schalenförmigen Führungsflächen S stellen demnach Abschnitte von Kreiszylinder-Innnenmantelflächen identischer Radien dar.

Die Zwischenplatte 12 weist Zentrierbohrungen 14 auf, welche mit den Zentrierbohrungen 14 der Palette 11 maßlich identisch sind.

Die Zentrierbohrungen 14 dienen der Aufnahme von Zentrier- bzw. Verbindungselementen 15.

Jedes Zentrierelement 15 mit einem Kopf 16 und einem Innensechskant 17 weist in seinem mittleren Axialbereich einen Zentrierschaft 18 mit der Außenmantelflä-che Z eines geraden Kreiszylinders auf.

An den Zentrierschaft 18 schließt sich als freier Endbereich ein Gewindezapfen 19 an, welcher in ein nicht näher bezeichnetes Innengewinde eines jeweils in einer Spannut L bzw. Q eingesetzten Nutensteins 20 eingreift.

Die Nutensteine 20 sind formschlüssig in den Spannuten L, Q aufgenommen und hintergreifen bzw. untergreifen deren Hinterschneidungsbereiche H.

Jeder Zentrierschaft 18 mit seiner Kreiszylinder-Außenmantelfläche Z wird mit relativ enger Passung, z.B. H6g6, an den Schalen S geführt - und damit zentriert.

Zur Befestigung der Zwischenplatte 12 weist der Zentrierschaft 18 eine Überlänge auf, welche die Schalen S überragt. Mit dieser Überlänge kann der Zentrierschaft 18 jeweils in eine kreiszylindrische Zentrierbohrung 21 der Zwischenplatte eingreifen.

Die Zentrierbohrung 21 ist als Stufenbohrung ausgebildet, deren oberer relativ weit bemessener Bereich 22 der Aufnahme des Schraubenkopfes 16 dient, während der engere Bereich der Stufenbohrung, nämlich die Paßbohrung 23, die Überlänge des Zentrierschaftes 18 mit verhältnismäßig enger Passung, wiederum z.B. mit H6g6, führt bzw. zentriert.

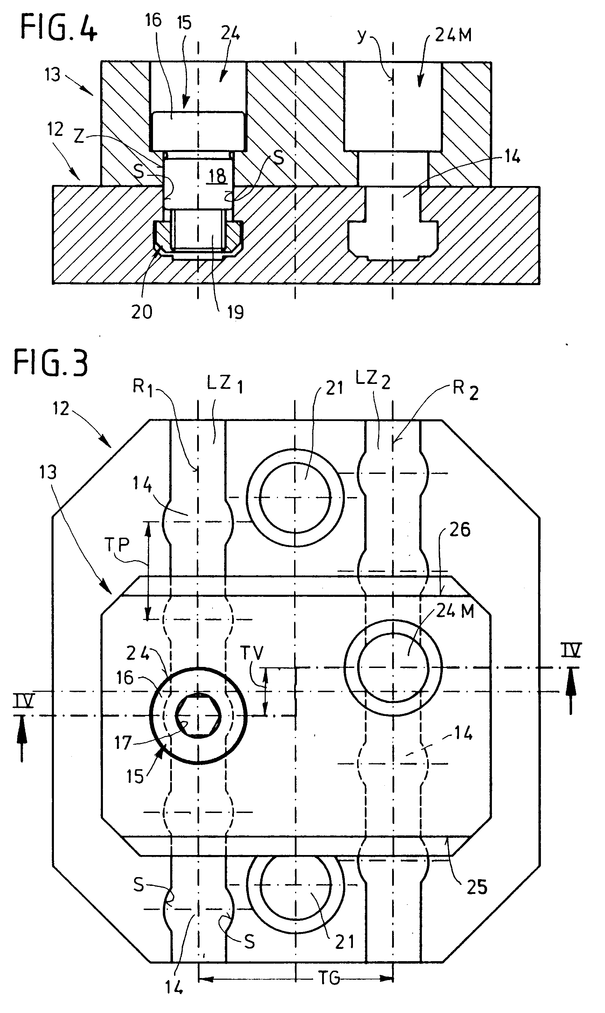

Anhand der Fig. 1 und 2 ist vorstellbar, daß die beiden kreiszylindrischen Zentrierbohrungen 21 (von denen eine nicht mit einem Zentrierelement 15 versehen ist) der Zwischenplatte 12 exakt mit zwei korrespondierenden Zentrierbohrungen 14 der Palette 11 fluchten. Der Rasterabstand der beiden Zentrierbohrungen 21 der Zwischenplatte 12 gemäß Fig. 1 und 3 beträgt beim Ausführungsbeispiel 100 mm. Auf diese Weise ist eine präzise Zentrierung der Zwischenplatte 12 bezüglich des durch die Zentrierbohrungen 14 der Palette 11 gebildeten Lochrasters gewährleistet.

Die von der Palette 11 gebildete Aufspannebene ist mit E bezeichnet und die E parallele Aufspannebene der Zwischenplatte 12 mit E1.

Immer vier benachbarte Zentrierbohrungen 14 der Palette 11 sind mit ihren Längsmittelachsen an den Ecken je eines Quadrats mit einer Kantenlänge von 50 mm angeordnet. Die Grundraster-Teilung TG beträgt demnach 50 mm.

Die Zwischenplatte 12 weist eine etwa rechteckige Grundform auf. Sie ist mit zwei Längsnuten LZ1 und LZ2 versehen. Die Zentrierbohrungen 14 der Längsnuten LZ1 und LZ2 bilden zwei einander parallele Längslochreihen, und zwar die Längslochreihe R1 und die Längslochreihe R2.

Im Unterschied zur Grundraster-Teilung TG der Palette 11 von 50 mm beträgt die Teilung TP der Längslochreihen R1 und R2 der Zwischenplatte 12 jeweils nur die Hälfte, d.h. 25 mm.

Das Raster der beiden Längslochreihen R1 und R2 sind um ein Viertel der Grundraster-Teilung TG, also um 12,5 mm, zueinander versetzt. Dieser Teilungsversatz von 12,5 mm ist mit TV bezeichnet.

Mit den Zentrierlöchern bzw. Zentrierbohrungen 21 der Zwischenplatte 12 sind die Zentrierbohrungen bzw. Gegenzentrierlöcher 24, 24M der Anschlagplatte 13 maßlich identisch. Die Gegenzentrierlöcher 24, 24M nehmen ebenfalls Zentrierelemente 15 auf, welche auch mit Nutensteinen 20 zusammen wirken, von denen in den Zeichnungen jeweils nur ein einziger dargestellt ist. Auch ist in den Zeichnungen jeweils nur ein Zentrierelement 15 im Zusammenhang mit den Gegenzentrierlöchern 24, 24M dargestellt.

Auch die Gegenzentrierlöcher 24, 24M sind analog zu den Zentrierbohrungen 14 der Längslochreihen R1 und R2 um den identischen Teilungsversatz TV von 12,5 mm zueinander versetzt.

Die Anschlagplatte 13 bildet zwei im Parallelabstand voneinander angeordnete ebene Zentrierflächen 25, 26, die sich jeweils orthogonal zu den Ebenen E, E1 erstrecken.

Das Gegenzentrierloch 24M ist mit seiner Längsmittelachse y exakt mittig zwischen den beiden Positionierflächen 25, 26 angeordnet.

Aufgrund dieser Verhältnisse wird deutlich, daß durch eine Drehung um 180° der Anschlagplatte 13 in der Aufspannebene E1, also von der Position gemäß Fig. 1 zur Position gemäß Fig. 3, ein relativer Feinrasterschritt der ebenen Positionierflächen 25, 26 mit dem Betrag TV = 12,5 mm eintritt. Hierbei gelangt die zunächst in Fig. 1 untere Positionierfläche 26 in ihre obere Position gemäß Fig. 3 und springt so im Verhältnis zur Positionierfläche 25 gemäß Fig. 1 um 12,5 mm zurück. Die zunächst obere Positionierfläche 25 gemäß Fig. 1 hingegen springt in ihrer neuen Position gemäß Fig. 3 gegenüber der Stellung der Positionierfläche 26 gemäß Fig. 1 nunmehr um das Versatzmaß TV, also ebenfalls um 12,5 mm, vor.

Die Gesamtanordnung ermöglicht daher folgende vorteilhafte Positioniermöglichkeiten:

Für den Fall, daß ein von den Positionierflächen 25, 26 zu positionierendes Werkstück um 50 mm versetzt werden soll, wird man die Zwischenplatte 12 einschließlich der auf ihr positionierten Anschlagplatte 13 mit der Grundrasterteilung TG um 50 mm bezüglich der Palette 11 versetzen.

Für den Fall, daß das Werkstück um 25 mm versetzt werden soll, wird man die Anschlagplatte 13 - ohne diese zu drehen - mit der Teilung TP entsprechend 25 mm relativ zur Zwischenplatte 12 versetzen.

Wenn aber nur ein Rasterschritt von 12,5 mm erforderlich ist, kann man die Anschlagplatte 13 in vorbeschriebener Weise um 180° drehen, um so einen Feinrasterschritt mit dem Teilungsversatz TV = 12,5 mm zu erzielen.

Im Zusammenhang der Zeichnungen ist auch vorstellbar, daß im Unterschied zu den Darstellungen der rechtwinklige Abstand der Längsachse y des mittigen Gegenzentrierlochs 24M von einer der beiden Positionierflächen 25, 26 ein Vielfaches eines Viertels der Grundraster-Teilung TG betragen kann. Eine solche Anordnung bedeutet, daß jegliche Positionsänderung zwischen Bauteilen 11, 12 und 13 auch einen rastergerechten Versatz der Positionierflächen 25, 26 zur Folge hat.

Anhand der Zeichnungen wird auch deutlich, daß man zur Verbindung und Positionierung der Elemente 11, 12 und 13 untereinander einander identische Zentrierelemente 15 und Nutensteine 20 verwenden kann.

## Patentansprüche

1. Aufspannvorrichtung (10) für Werkzeugmaschinen mit einem eine Aufspannebene (E) darstellenden, z.B. eine Aufspannpalette od.dgl. bildenden, Aufspannelement (11), welches Zentrierlöcher (14) aufweist, die in jeweils einander parallelen, sich rechtwinklig kreuzenden Quer- (Q) und Längslochreihen (L) in einer einheitlichen bestimmten Grundraster-Teilung (TG) angeordnet sind, und mit einem mittels Zentrierkörper (15) auf dem Aufspannelement (11) positionierbaren, ein zum Grundraster korrelierendes Anschlußlochraster aufweisenden Anschlußaufspannelement (12), welches ein Werkstück-Positionierelement (13), wie z.B. Anschlagleiste od.dgl. aufweist, welches zwei im Parallelabstand voneinander angeordnete, sich orthogonal zur Aufspannebene (E) erstreckende ebene Positionierflächen (25, 26) und zwei mit unmittelbar benachbarten Zentrierlöchern (14) des Anschlußaufspannelements (12) fluchtende Gegenzentrierlöcher (24, 24M) aufweist, von denen eines, das mittige Gegenzentrierloch (24M), mit seiner Längsmittelachse (y) mittig zwischen den beiden Positionierflächen (25, 26) angeordnet ist, wobei die Zentrierlöcher (14) des Anschlußaufspannelements (12) und die Gegenzentrierlöcher (24, 24M) des Werkstück-Positionierelements (13) maßlich identisch sind, und wobei das Anschlußaufspannelement (12) in halbierter (TP) Grundraster-Teilung (TG) mindestens zwei einander parallele Längslochreihen (R1, R2) aufweist, dadurch gekennzeichnet, daß sowohl die Zentrierlöcher (14) der Längslochreihen (R1, R2) des Anschlußaufspannelements als auch analog dazu die Gegenzentrierlöcher (24, 24M) des Werkstück-Positionierelements (13) jeweils um ein Viertel (TV) der Grundraster-Teilung (TG) zueinander längsversetzt sind.

2. Aufspannvorrichtung nach Anspruch 1, dadurch gekennzeichnet, daß der rechtwinklige Abstand der Längsachse (y) des mittigen Gegenzentrierlochs (24M) von einer der beiden Positionierflächen (25, 26) ein Vielfaches eines Viertels (TV) der Grundraster-Teilung (TG) beträgt.

3. Aufspannvorrichtung nach Anspruch 1 oder nach Anspruch 2, dadurch gekennzeichnet, daß jede Längslochreihe (R1, R2) des Anschlußaufspannelementes (12) einen integrierten Bestandteil einer T-förmig od.dgl. hinterschnittenen Spannut (L, Q) bildet.

## Claims

1. Clamping device (10) for machine tools, having a clamping element (11), which defines a clamping plane (E), forms e.g. a clamping pallet or the like and has centring holes (14) arranged at a uniform specific basic grid dimension (TG) in parallel transverse (Q) and parallel longitudinal rows (L) of holes, which intersect at right angles, and having a connection clamping element (12) which is positionable by means of centring elements (15) on the clamping element (11), has a connection hole grid correlating to the basic grid and has a workpiece positioning element (13) such as, for example, a stop rail or the like, which has two flat positioning surfaces (25, 26) disposed at a parallel distance from one another and extending orthogonally relative to the clamping plane (E) and two opposing centring holes (24, 24M), which are aligned with immediately adjacent centring holes (14) of the connection clamping element (12) and of which one, the central opposing centring hole (24M), is disposed with its longitudinal centre line (y) midway between the two positioning surfaces (25, 26), wherein the centring holes (14) of the connection clamping element (12) and the opposing centring holes (24, 24M) of the workpiece positioning element (13) are identical in dimension and wherein the connection clamping element (12) has, spaced at half (TP) of the basic grid dimension (TG), at least two parallel longitudinal rows of holes (R1, R2), characterized in that both the centring holes (14) of the longitudinal rows of holes (R1, R2) of the connection clamping element and, analogously thereto, the opposing centring holes (24, 24M) of the workpiece positioning element (13) are longitudinally offset relative to one another in each case by a quarter (TV) of the basic grid dimension (TG).

2. Clamping device according to claim 1, characterized in that the rectangular distance of the longitudinal axis (y) of the central opposing centring hole (24M) from one of the two positioning surfaces (25, 26) is a multiple of a quarter (TV) of the basic grid dimension (TG).

3. Clamping device according to claim 1 or according to claim 2, characterized in that each longitudinal row of holes (R1, R2) of the connection clamping element (12) forms an integral part of a clamping groove (L, Q) undercut in the shape of a T or the like.

## Revendications

1. Dispositif de serrage (10) pour machines-outils, avec un élément de serrage (11) constituant un plan de serrage (E), par exemple une palette de serrage ou analogue, élément de serrage présentant des trous de serrage (14), disposés respectivement en rangées de trous transversales (Q) et rangées de trous longitudinales (L), parallèles entre elles, se croisant à angle droit, en suivant une division à trame de base (TG) déterminée unitaire, et avec un élément de serrage de raccordement (12), pouvant être positionné au moyen d'un corps de centrage (15) sur l'élément de serrage (11), présentant une trame de trous de raccordement corrélée vis-à-vis de la trame de base, élément de serrage de raccordement qui présente un élément de positionnement de pièce façonnée (13), tel que par exemple une baguette de butée ou analogue, qui présente deux surfaces de positionnement (25, 26), disposées parallèlement et espacées l'une de l'autre, planes, s'étendant perpendiculairement par rapport au plan de serrage (E), et deux trous de centrage conjugués (24, 24M) alignés avec des trous de centrage (14) directement voisins, appartenant à l'élément de serrage de raccordement (12), trous de centrage conjugués dont l'un, le trou de centrage conjugué central (24M), est disposé avec son axe médian longitudinal (y) centralement entre les deux surfaces de positionnement (25, 26) et les trous de centrage (14) de l'élément de serrage de raccordement (12), et les trous de centrage conjugués (24, 24M) de l'élément de positionnement de pièce façonnée (13) étant dimensionnellement identiques, et l'élément de serrage de raccordement (12) présentant, en suivant une division de trame de base (TG) à division par deux (TP), au moins deux rangées de trous longitudinales (R1, R2) parallèles les unes aux autres, caractérisé en ce que, tant les trous de centrage (14) des rangées de trous longitudinales (R1, R2) de l'élément de serrage de raccordement, qu'également, de façon analogue à cela, les trous de centrage conjugués (24, 24M) de l'élément de positionnement de pièce façonnée (13), sont chacun décalés longitudinalement les uns par rapport aux autres de la valeur d'un quart (TV) de la division de trame de base (TG).

2. Dispositif de serrage selon la revendication 1, caractérisé en ce que l'espacement à angle droit, entre l'axe longitudinal (y) du trou de centrage conjugué central (24M) et l'une des deux surfaces de positionnement (25, 26), est un multiple d'un quart (TV) de la division de trame de base (TG).

3. Dispositif de serrage selon la revendication 1 ou selon la revendication 2, caractérisé en ce que chaque rangée de trous longitudinale (R1, R2) de l'élément de serrage de raccordement (12) constitue un composant intégré d'une rainure de serrage (L, Q) en forme de T ou analogue, dotée d'une contre-dépouille.
